# EUROPÄISCHE PATENTSCHRIFT

(11) **EP 2 471 728 B1**
(45) Veröffentlichungstag und Bekanntmachung des Hinweises auf die Patenterteilung: **12.06.2019**
(21) Anmeldenummer: 11192808.1
(22) Anmeldetag: 09.12.2011
(51) Int. Cl.: B65G 47/71, B65G 47/64

(54) **Anordnung mehrerer miteinander gekoppelter Behälterhandhabungs- und/oder Behälterbehandlungs- und/oder Behältertransportmodule sowie Verfahren zum Transport, zur Behandlung und/oder Handhabung von Behältern**
Assembly of several container treatment and/or container handling and/or container transport modules coupled together and method for transporting, handling and/or treating containers
Agencement de plusieurs modules de manipulation et/ou de traitement et/ou de transport de récipients couplés ainsi que procédé de transport, de traitement et/ou de manipulation de récipients

(30) Priorität: 03.01.2011 DE 102011007935; 07.04.2011 DE 102011016372
(43) Veröffentlichungstag der Anmeldung: 04.07.2012
(73) Patentinhaber: Krones AG, 93073 Neutraubling (DE)
(72) Erfinder: Hartl, Michael, 93073 Neutraubling (DE); Hertel, Florian, 93073 Neutraubling (DE); Raith, Stefan, 93073 Neutraubling (DE)
(74) Vertreter: Benninger, Johannes

(56) Entgegenhaltungen:
- EP-A1- 1 260 469
- EP-A2- 0 124 846
- EP-A2- 0 471 401
- WO-A1-01/85544
- WO-A1-99/06308
- WO-A1-2009/150379
- DE-A1- 2 801 387
- DE-A1- 2 845 660
- DE-A1- 3 007 104
- DE-A1- 3 504 555
- DE-A1- 3 638 436
- DE-A1- 4 133 114
- DE-A1- 4 242 163
- DE-A1- 4 442 586
- DE-A1- 10 115 543
- DE-A1-102004 048 515
- DE-C- 878 019
- DE-U1- 9 218 611
- DE-U1- 20 002 411
- DE-U1- 29 913 237
- DE-U1-202005 019 906
- FR-A1- 2 933 681
- GB-A- 2 107 666
- JP-A- H0 551 087
- US-A- 4 760 909
- US-A1- 2005 011 814

## Beschreibung

Die vorliegende Erfindung betrifft eine Anordnung mehrerer miteinander gekoppelter und in unmittelbar aufeinander folgender Behandlungsabfolge stehender Behälterhandhabungs- und/oder Behälterbehandlungs- und/oder Behältertransportmodule mit den Merkmalen des Oberbegriffs des unabhängigen Anspruchs 1. Die Erfindung betrifft weiterhin ein Verfahren zum Transport, zur Behandlung und/oder Handhabung von Behältern mit den Merkmalen des Oberbegriffs des unabhängigen Verfahrensanspruchs 5.

Bei der Zusammenfassung und Verpackung von einzelnen Behältern, bspw. von befüllten Flaschen, werden diese normalerweise nacheinander aus einer Verarbeitungsmaschine geliefert, bspw. aus eine Abfüllanlage oder einer Etikettiervorrichtung, um sie in nachfolgenden Verarbeitungsstufen weiter zu behandeln und/oder zu Gebinden zusammenzufassen und/oder anderweitig zu verpacken. Zum Zusammenstellen und Verpacken mehrerer Behälter in einem Gebinde wird die Zuführung der Behälter zur Verpackungsmaschine im Massenstrom bevorzugt.

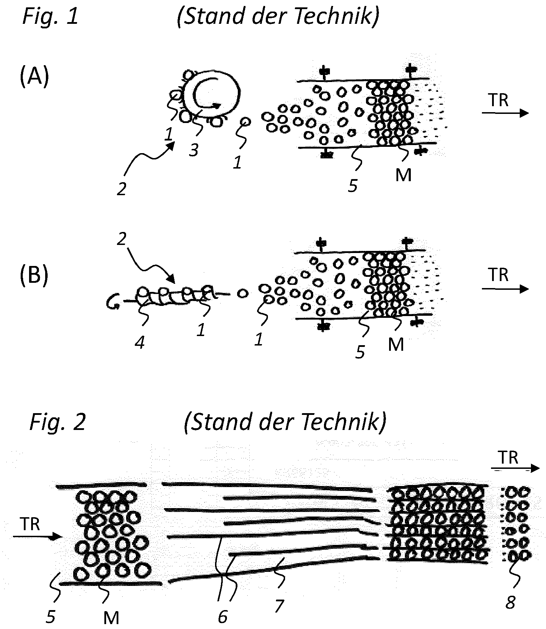

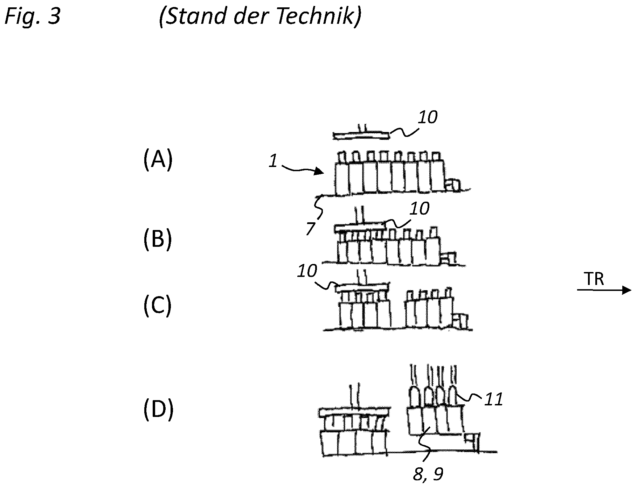

Der Behältertransport zwischen einer Behälterbehandlungsmaschine wie bspw. einer Etikettiermaschine und einer nachgeordneten Verpackungsmaschine kann bspw. entsprechend der Fig. 1, der Fig. 2 und/oder der Fig. 3 erfolgen. Die Figuren 1 bis 3 illustrieren jeweils Teilaspekte bekannter Behälterhandhabungseinrichtungen. Die bspw. aus der Etikettiervorrichtung (nicht dargestellt) gelieferten Behälter 1 werden einzeln über eine rotierende Förder- und/oder Übergabeeinrichtung 2 wie einen Drehstern 3 (Fig. 1A, oben) oder eine Förderschnecke 4 (Fig. 1B, unten) auf ein Förderband 5 übergeben und in Transportrichtung TR zur weiterverarbeitenden Vorrichtung (nicht dargestellt), insbesondere zu einer Verpackungsmaschine, weiterbefördert. Die Behälter 1 werden im Bereich des Förderbandes 5 aufgestaut und im Massenstrom M zur hier nicht gezeigten Verpackungsmaschine gefördert. Vor der Verpackungsmaschine werden die Behälter 1 entsprechend Fig. 2 mittels senkrecht zur Transportebene angeordneter Trennelemente 6 in separate Gassen 7 aufgeteilt und anschließend vereinzelt und in Behältergruppen 8 eingeteilt, um in der nachfolgenden Verpackungsvorrichtung die gewünschten Gebindeeinheiten bilden zu können. Die Gassen 7 können ggf. trichterförmig bzw. winkelig zueinander angeordnet sein. Eine Möglichkeit zur Bildung von Behältergruppen 8 bzw. Gebinden 9 ist beispielhaft in Fig. 3 dargestellt. Die innerhalb einer Gasse 7 in Reihe in Transportrichtung TR beförderten Behälter 1 (Fig. 3A) werden mittels einer Gruppiervorrichtung 10 (Fig. 3B) in die gewünschten Einheiten eingeteilt (Fig. 3C) und anschließend mit Hilfe von Greifmitteln 11 (Fig. 3D) weiter zur nachfolgenden Verpackungsvorrichtung (nicht dargestellt) befördert.

Das Ordnen der Gebinde aus dem Massenstrom heraus erfordert ein relativ aufwändiges Behälter- und/oder Gebindehandling, woraus leicht Fehler oder Störungen entstehen können. Auch der Transport der Behälter an sich ist relativ störanfällig.

Aus der DE 44 42 586 A1 sind eine Anordnung nach dem Oberbegriff des Anspruchs 1 und ein Verfahren nach dem Oberbegriff des Anspruchs 5 bekannt.

Aus der DE 197 52 908 A1 ist ein Verfahren zum automatischen Sortieren von Objekten bekannt. Die Objekte werden dabei in stetigem Förderfluss in zufälliger Ordnung einem Zuführband aufgegeben und zu einer Gruppiereinrichtung gefördert. Eine Erkennungseinrichtung erfasst die Lage und Position der ankommenden Objekte auf dem Zuführband und meldet diese Daten einer die Bandgeschwindigkeit berücksichtigende Steuereinheit für eine Handhabungseinrichtung, welche die Objekte in einen gruppierten Ordnungszustand sortiert. Die Objekte werden auf dem Zuführband gruppiert und weiterbefördert, wobei die Steuereinheit den zufälligen Ordnungszustand auf dem Zuführband auswertet und die Lage einer Gruppe auf dem Zuführband bestimmt.

Die DE 10 2004 048 515 A1 beschreibt eine Sortiervorrichtung und eine Fördervorrichtung für Stückgut wie bspw. Flaschen sowie ein Verfahren zum Fördern oder Sortierten von solchem Stückgut. Das Stückgut wird dabei aufgenommen, gehalten und zu Abgabestellen befördert. Die Haltevorrichtungen sind bei einzelnen Transporteinheiten angeordnet, die einzeln steuerbar von einer Aufnahmestelle zu einer auswählbaren Abgabestelle geleitet werden können.

Die WO 2009/153080 A1 offenbart weiterhin ein Verfahren und eine Vorrichtung zum geordneten Zusammenstellen von Artikeln, bei dem lose, ungruppierte Artikel mit mindestens einem Einlaufband mindestens einer Gruppiereinrichtung zugeführt werden. Die Gruppiereinrichtung stellt die Artikel auf einem Auslaufband nacheinander in mehreren behälterlosen Gruppen geordnet auf. Zudem werden über das Auslaufband behälterlos gruppierte Artikel einer Verpackungseinrichtung zugeführt.

Ein vorrangiges Ziel der Erfindung wird darin gesehen, eine verbesserte, effektivere und zuverlässigere Behälterbehandlung und -beförderung vorzuschlagen, die es erlaubt, Behälter möglichst schnell und dabei störungsfrei von einer ersten Bearbeitungsvorrichtung zu einer weiteren Bearbeitungs- und/oder Handhabungsvorrichtung zu transportieren. Das vorgeschlagene System soll möglichst flexibel sein und es nach Möglichkeit erlauben, individuell konfigurierte Artikelzusammenstellungen und/oder Gebinde und/oder Palettenlagen o. dgl. zu erzeugen.

Diese Ziele der Erfindung werden mit den Gegenständen der unabhängigen Ansprüche 1 und 5 erreicht. Merkmale vorteilhafter Weiterbildungen der Erfindung ergeben sich aus den jeweiligen abhängigen Ansprüchen. So schlägt die vorliegende Erfindung zur Erreichung der Ziele der Erfindung eine Anordnung nach dem Anspruch 1.

Wahlweise können auch mehrere Verzweigungen vorgesehen sein, die damit ein größeres Netz von miteinander verbundenen Bewegungsbahnen entstehen lassen.

Wenn im vorliegenden Zusammenhang von einem Transportmodul mit mehreren separat voneinander beweglichen und jeweils an Bewegungsbahnen gebundene Transporteinheiten sowie von einem Shuttle-System die Rede ist, so sind diese Begriffe synonym zu verstehen, da sie jeweils dasselbe meinen. Das Shuttle-System bzw. das wenigstens eine Transportmodul umfasst somit eine Mehrzahl von jeweils autonomen oder teilautonomen, gleisgestützten oder gleisunabhängigen Shuttles oder Transporteinheiten, wobei die Shuttles oder Transporteinheiten in einer Ausführungsvariante bspw. oben, seitlich oder unten aufgehängt und/oder auf einem Gleissystem bzw. einer Gleisunterlage geführt sein können.

Speziell eine Ausführungsvariante mit sog. Magnet-Shuttlen als Transporteinheiten bietet den Vorteil, dass jedes dieser Shuttle bzw. jede dieser Transporteinheiten individuell angesteuert werden kann und jede Flasche in eine separate Gasse übergeben kann. Auf diese Weise kann auch ein Geschwindigkeitsabbau gewährleistet werden. Die einzelnen leeren Shuttle oder Transporteinheiten werden dann wieder in den Rück-Kreislauf eingespeist, zwischengeparkt oder anderweitig gesteuert.

Gemäß einer bevorzugten Ausführungsvariante der erfindungsgemäßen Anordnung sind zumindest das erste Behälterbehandlungs- und/oder Behälterhandhabungsmodul und das diesem unmittelbar nachgeordnete Transportmodul und/oder das zweite Behälterbehandlungs- und/oder Behälterhandhabungsmodul in einer baulichen Einheit zusammengefasst, womit insbesondere eine Verblockung gemeint sein kann. D.h., die aufeinander folgenden Module können derart miteinander verblockt sein, dass keine dazwischen angeordneten Transportabschnitte zur Überbrückung von Distanzen zwischen aufeinander folgenden Behandlungs- oder Handhabungsstationen erforderlich sind.

Bei Bedarf können mit einem Packmodul auch Gebinde mit jeweils unterschiedlichen Behältern/Sorten verarbeitet und zusammengestellt werden.

Wahlweise kann auch die im Bereich des wenigstens einen Transportmoduls angeordnete Verzweigungsstelle zur gesteuerten Lenkung und/oder Aufteilung des Produkt- und/oder Behälterstroms zu zwei oder mehr separaten zweiten, dritten etc. Behälterbehandlungs- und/oder Behälterhandhabungsmodulen vorbereitet sein. Die zweiten, dritten, vierten etc. Behälterbehandlungs- und/oder Behälterhandhabungsmodule können auch jeweils unterschiedliche Funktionen aufweisen, so dass bspw. eines dieser Module für die Verpackung sorgen kann, während ein weiteres Modul für das Palettieren und/oder Stapeln von Behältern und/oder Gebinden ausgestattet sein kann. Auf diese Weise wird eine äußerst flexible Transport- und Handhabungsmaschine zur Verfügung gestellt, welche in den unterschiedlichsten Konfigurationen die an sie gestellten Aufgaben der Handhabung, Behandlung und/oder Verpackung von Behältern in zufriedenstellender Weise erfüllen kann.

Verteilweichen können ggf. einfach oder mehrfach kaskadiert bzw. gestaffelt angeordnet sein, wodurch aus einem einzelnen Behälterstrom eine mehrfache Aufteilung in eine beliebige Anzahl von Einzelströmen erfolgen kann.

Wahlweise ist dem Etikettiermodul ein Sternverteiler nachgeordnet. Dabei handelt es sich um einen Hauptausgangsstern, der die aus dem Etikettiermodul kommenden Behälter aufnimmt und abwechselnd an zwei nachgeordnete Verteilersterne abgibt, so dass eine Aufteilung der Behälter auf zwei Förderströme erfolgt. Mittels Verteilerweichen werden die Förderströme anschließend weiter auf jeweils drei, d.h. insgesamt sechs separate Gassen aufgeteilt. Die in nunmehr sechs Gassen aufgeteilten Behälterströme können mittels geeigneten Gruppiereinrichtungen zu Behältergruppen zusammengefasst und auf einem Förderband zu gewünschten Gebinden zusammengestellt werden.

Eine weitere alternative oder ergänzende Ausführungsvariante der erfindungsgemäßen Anordnung sieht vor, dass das wenigstens eine Transportmodul eine Förderkette und/oder Förderschiene umfasst, bei der von einem Transportweg wenigstens ein weiterer Transportweg abzweigt. Diese Förderkette kann wahlweise mit mehreren beweglichen Transporteinheiten zusammenwirken, die einzeln oder in Gruppen mit der Förderkette koppelbar oder von dieser entkoppelbar sind. So können die Behälter direkt aus einer vorherigen Station der Maschine mit einer entsprechend vorbereiteten Förderkette übernommen werden, so dass sie im Anschluss unterschiedliche Behandlungen durchlaufen können. Je nach Geschwindigkeit, Teilung, etc. kann zwischen Maschinenauslauf und Kette auch ein Stern bzw. sog. Verteil- ober Übergabestern geschaltet sein. Die Kette kann je nach Behälterart in unterschiedlichen Ausgestaltungen ausgeführt sein, bspw. als Fächerkette, als Kette mit Aufsatz für ein sog. Neckringhandling, mit Greifelementen zum Fixieren der Behälter jeweils an deren Behälterrumpf, mit Magnet-Shuttlen etc. Nach der Aufnahme der Flaschen oder Behälter in der Kette können die Behälter diverse Datierungen, Inspektionseinheiten, Ausscheidesysteme, etc. durchlaufen und werden dann im Anschluss von der Kette gezielt in einzelne Gassen übergeben. Dies kann durch die spezielle Kontur der Kette erfolgen, so dass die Übergabe tangential erfolgen kann, oder auch durch Ausstoßeinrichtungen, welche die Behälter in die benötigten Gassen schieben oder ziehen. Um nicht das komplette Gewicht des gefüllten Behälters in die Kette zu übernehmen, können die Flaschen weiterhin über Führungsleisten am Boden geschoben werden.

Bei einer weiteren Variante der Anordnung übernehmen die Magnet-Shuttle die Flaschen oder Behälter aus einer Kette, einem Greiferstern, aus Neckring-Handling-Einrichtungen oder ähnlichen Einrichtungen und greifen die Flaschen oder Behälter jeweils von unten. Dabei wird eine form- bzw. kraftschlüssige Verbindung zwischen Shuttle und Behälter hergestellt, welche z.B. mit einer Drei-Punkt-Klemmung ausgeführt sein kann. Diese Klemmung ist vorzugsweise variabel auf unterschiedliche Behältergrößen, -formen und -durchmesser einstellbar. Die Fixierung der Behälter kann wahlweise auch mittels eines Hebel zwischen Bodenstück und Klemmung gelöst oder aktiviert werden, so bspw. mit einem Betätigungs-Stößel, so dass in der Regel kein Umrüstungsaufwand bei einem Produktwechsel oder bei der Handhabung und dem Transport unterschiedlicher Behältergrößen erforderlich ist. Die Übergabe der Flaschen oder Behälter kann vorzugsweise wieder in eine Transporteinrichtung zur weiteren Bearbeitung der Behälter erfolgen. Als Beispiel können dies sog. Neckring-Leisten sein, in denen die Flaschen oder Behälter mit dem Magnet-Shuttle übergeben werden und im Anschluss im Neckring-Handling in die Gruppierung in einem Packmodul wie bspw. einem sog. Einweg-Packer einlaufen.

Ein gemeinsames Merkmal aller genannten Varianten besteht darin, dass die Bewegungs- oder Verfahrbahnen in einem Sinne vorgegeben sind, dass eine zentrale Steuerung der Transporteinheiten bzw. Shuttle für deren individuelle Bewegungs- bzw. Bahnführung entlang der vorgegebenen Bahnen sorgen kann, ohne dass dadurch eine individuelle Ansteuerung der einzelnen Transporteinheiten oder Shuttle behindert ist.

Jeweils ein einzelnes Pick-und-Place-System ist für mehrere parallele Gassen zuständig. Mit dem System werden bspw. einzelne Behälter oder vorgruppierte Behältereinheiten aus den Förderströmen entnommen und auf einem Förderband in einer passenden Position abgesetzt und zu Gebinden zusammen gestellt, die dann im Packmodul entsprechend verpackt werden. Das Pick-und-Place-System ist auch in der Lage, mindestens einen Behälter auf einer Fördereinrichtung zu platzieren und dem zweiten Behälterbehandlungs- und/oder Behälterhandhabungsmodul und/oder dem wenigstens einen Packmodul zuzuführen. Typischerweise werden mit dem System bspw. einzelne Behälter oder vorgruppierte Behältereinheiten aus den Förderströmen entnommen und auf einem Förderband in einer passenden Position abgesetzt und zu Gebinden zusammen gestellt, die dann im Packmodul entsprechend verpackt werden.

Zur Erreichung des o.g. Ziels umfasst die vorliegende Erfindung auch ein Verfahren nach dem Anspruch 5.

Bei einer Variante des Verfahren kann der durch die Transporteinheiten mit den von diesen transportierten Behältern gebildete Produkt- oder Behälterstrom innerhalb des wenigstens einen Transportmoduls an mindestens einer Verzweigungsstelle gesteuert gelenkt und/oder aufgeteilt werden. Zudem kann vorgesehen sein, dass die Behälter im zweiten Behälterbehandlungs- und/oder Behälterhandhabungsmodul und/oder dem wenigstens einen Packmodul mittels eines Pick-und-Place-Systems von den Transporteinheiten getrennt und an eine nachgeordnete Handhabungs- und/oder Packstation übergeben werden.

Wahlweise kann der Produkt- oder Behälterstrom innerhalb des wenigstens einen Transportmoduls an mindestens einer Verzweigungsstelle gesteuert gelenkt und/oder aufgeteilt werden. Weiterhin kann vorgesehen sein, dass der Produkt- oder Behälterstrom mittels wenigstens einer Förderkette und/oder Förderschiene bewegt wird, bei der von einem Transportweg wenigstens ein weiterer Transportweg abzweigt. Zudem kann auch vorgesehen sein, dass die Förderkette mit mehreren beweglichen Transporteinheiten zusammenwirkt, die einzeln oder in Gruppen mit der Förderkette koppelbar oder von dieser entkoppelbar sind.

Die Module sind vorzugsweise baulich zusammengefasst. Insbesondere können das Etikettiermodul und das Packmodul zu einer baulichen Einheit zusammengefasst sein, womit insbesondere eine Verblockung der Module gemeint sein kann. Eine Ausführungsvariante kann ein Packmodul vorsehen, welches für die Zusammenfassung von Gruppierungen, Gebinden und/oder Palettenlagen aus gleichen oder unterschiedlichen Behältern und/oder Gebinden und/oder Gebinden mit jeweils unterschiedlichen Behältern bzw. Sorten vorbereitet ist. An das Etikettiermodul bzw. an die Etikettiermodule kann sich wahlweise ein Auslauf- bzw. Übergabestern zum Transport und zur Förderung der Behälter oder Gebinde anschließen. Von diesem Auslauf- bzw. Übergabestern kann wahlweise eine Aufteilung auf zwei oder drei damit gekoppelte Sterne erfolgen, um auf diese Weise den Artikel- oder Gebindestrom einfach oder mehrfach aufzuteilen.

Wahlweise kann sich den Auslauf- bzw. Übergabesternen oder auch unmittelbar dem Etikettiermodul ein für den Transport der Behälter verantwortliches sog. Shuttle-System anschließen, das durch unterschiedlichste Varianten von autonomen, teilautonomen, gleisgestützten oder gleisunabhängigen sog. Shuttles gebildet sein kann, die wahlweise oben an Gleisen aufgehängt sind oder auf geeigneten Schienenunterlagen laufen können. Als Shuttle-System wird in diesem Zusammenhang eine Anordnung einer Mehrzahl von unabhängig voneinander beweglichen Transportmodulen verstanden, die jeweils einen oder mehrere Behälter bzw. ein oder mehrere Gebinde gleichzeitig zwischen dem Etikettiermodul und dem Packmodul befördern können. Der Transport und die Bewegungssteuerung dieser Shuttle kann wahlweise mechanisch, bspw. mit Förderketten, elektromotorisch oder auch mittels Magnetantrieben erfolgen.

Gemäß einer vorteilhaften Ausführungsvariante kann ein solches Shuttle-System weitere Handhabungseinrichtungen ersetzen, da solche Shuttle-Systeme ihre Transportgüter bis unmittelbar zur Packmaschine befördern können. So kann ein solches erfindungsgemäßes Shuttle-System bspw. ein sog. Pick-and-Place-System komplett ersetzen, denn die Shuttle-Einheiten können bis zur Packmaschine fahren. Gemäß einer bevorzugten Ausführungsform ist das Shuttle-System im Wesentlichen ohne weitere Handhabungseinrichtungen zwischen dem Etikettiermodul und dem Packmodul angeordnet bzw. mit diesen Modulen verblockt.

Das Transportsystem kann bspw. durch eine Mitnehmerkette angetrieben werden. Es ist aber auch denkbar und kann sehr vorteilhaft sein, dass/wenn jedes System seinen eigenen Antrieb aufweist. Dabei ist die Verwendung von Linearmotoren, stromloser Energieübertragung oder anderer bekannter Antriebe möglich. Das Transportsystem kann auch über eine Verbindung der einzelnen Transportsysteme, bspw. durch Zug oder Druck, bewegt werden. Die Aufteilung in mehrere Reihen kann durch eine Weiche, bspw. über eine Schiene, einen sog. Pusher o. dgl., aber auch über ein individuelles Lenksystem erfolgen. Die Teilung kann auch über den eigenen Antrieb erfolgen.

Das Transportsystem kann eine Plattform mit einer Vielzahl von sog. Shuttle sein, auf die der Behälter gestellt werden können. Bei Bedarf kann der Behälter form- oder kraftschlüssig fixiert werden. Auch das Ansaugen oder das magnetische Fixieren bei magnetischen Behältern ist denkbar. Gemäß einer alternativen Ausführungsform greift das Transportsystem die Behälter. Dies ist von unten, von der Seite, aber auch von oben denkbar. Somit kann das Transportsystem z.B. als Packtulpe hängend, fahrend, oder als seitlich fahrender Greifer ausgeführt werden. Die Shuttles können somit mittels Gleissystemen aller Art, jedoch wahlweise auch mittels Linearmotoren oder Magnetantrieben o. dgl. bewegt und/oder geführt werden. So können die Shuttles bspw. mehrere Läufer aufweisen, die einen magnetischen Antrieb in Zusammenwirkung mit Spulen bzw. Statoren an den Führungen ermöglichen.

Durch eine Rotation der einzelnen Transportsysteme kann eine Behälterausrichtung erfolgen. Dies kann bei besonderen Behälterformen notwendig sein, weiterhin kann dadurch die Ausrichtung des Etiketts erfolgen.

Durch die individuelle Führung können verschiedene Produkte gemischt werden. Es ist denkbar, dass zwei oder mehrere Transportströme bspw. aus mehreren Etikettiermodulen mit verschiedenen Behältern zusammen geführt werden, um Mischgebinde, sog. Regenbogenpaletten oder gemischte Paletten zu erstellen.

Das Transportsystem kann auch zumindest teilweise die Aufgaben des Packmoduls übernehmen, indem z.B. die Packtulpen einen vertikalen Hub ausführen können und somit Behälter in Gebinde eingesetzt werden können. Es ist auch denkbar, dass die Behälter auf eine vordefinierte Stelle in dem Packmodul gesetzt werden.

Die entleerten Transporteinheiten werden nach dem Packmodul wieder zum Etikettiermodul zurückgeführt, so dass ein Kreislauf entsteht.

Durch das Transportsystem können die Geländerführung der Trennelemente zur Aufteilung der Behälter aus einem Massenstrom in Gassen und die bei einem Produktwechsel notwendige Neueinstellung der Trennelemente ersetzt werden. Beschädigungen an den Behältern können vermieden werden. Außerdem können nicht befüllte Gassen vermieden und Stillstandszeiten verringert werden. Der Lärmpegel kann vor allem bei Glasflaschen wesentlich reduziert werden, da kein Transport der Flaschen im Massenstrom erfolgt, bei dem sich diese allseitig berühren, permanent kollidieren und dabei nicht nur verkratzen, sondern auch hohe Lärmpegel erzeugen. Durch die Wegsteuerung werden neue Kommissionsmöglichkeiten eröffnet. Das Greifen der einzelnen Behälter verhindert zudem ein Umfallen der Behälter und daraus resultierende Störungen.

Die Erfindung kann als Transportsystem von Behältern verwendet werden. Durch das Transportsystem können Aufgaben wie Formieren, Ausrichten, Mischen und Packen übernommen werden, die sonst von eigenen Maschinen ausgeführt werden.

Um die durch das derzeit verwendete System verursachten Störungen zu umgehen, werden die aus dem Etikettiermodul kommenden Behälter also direkt auf Transportströme verteilt. Insbesondere erfolgt nach dem Etikettiermodul kein Aufstauen der Behälter zu einem ungeordneten Massenstrom. Stattdessen werden die Behälter direkt in mindestens zwei Gassen aufgeteilt.

Eine Verteilweiche liefert eine Vor-Formation der Behälter, indem sie z.B. für eine 6er Gebinde-Formation immer zwei Behälter nacheinander in die jeweilige Gasse aufteilt und dann alternierend die nächste Gasse wieder mit zwei Behältern befüllt.

Der Transport der Behälter kann bspw. aufgestaut werden, so dass die Erzeugung eines Abstandes zwischen den Behältern oder auf einem Shuttle möglich ist. Die aufgereihten Behälter können nun über Pick-und-Place-Systeme in eine gewünschte Formation gesetzt oder unmittelbar in Gebinde eingesetzt werden. Die Leistung zum Übersetzen der Behälter- Formationen auf das Transportband oder das Shuttle System kann u.a. durch eine Aneinanderreihung von aufeinander folgenden Pick-und-Place-Systemen erhöht werden.

Durch die geordnete Förderung der Behälter kann eine vorgegebene Kommissionierung erfolgen, mit der Mischgebinde, Regenbogenpaletten und nahezu beliebige andere Mischpaletten erstellt werden können.

Das System gewährleistet durch die gesteuerte Aufteilung immer eine gleichmäßige Gassenbefüllung.

Das Pick-und-Place-System kann die Behälter einzeln oder auch in Gruppen erfassen. Die Gruppen können so ausgebildet sein, dass mehrere Behälter der Formation in einer Richtung angeordnet sind oder dass bereits die komplette Formation gebildet wird. Das hierfür benötigte Werkzeug, bspw. Greifvorrichtungen für die Behälter, kann zusätzlich noch bewegliche Einheiten aufweisen, um z.B. den genauen Behälterabstand für das gewünschte Gebinde zu erreichen oder auch die Behälter zu drehen, um z.B. die Etiketten nach außen zeigen zu lassen, sofern dies gewünscht ist.

Wird das Pick-Place-System in Laufrichtung der Behälter verfahrbar ausgeführt, insbesondere durch Synchronisierung des Pick-und-Place-Systems auf Behältergeschwindigkeit, kann das Übersetzen ohne Stopper erleichtert werden und ein kontinuierlicher Behälterstrom ohne Anhalten (sog. Stop and Go) erreicht werden.

Die Erfindung kann als Transportsystem zum Befördern, Verteilen, Lenken und Kommissionieren von Behältern verwendet werden. Durch das Transportsystem können Aufgaben wie Formieren, Ausrichten, Mischen und Packen übernommen werden, die ansonsten von eigenen Maschinen ausgeführt werden. Das System kann also insbesondere für das Aufteilen von aus einem Etikettiermodul oder einer anderen Handhabungs- oder Behandlungsmaschine für Behälter kommenden Behältern in mehrere Gassen und die Formatierung der Behälter für die nachfolgende Verarbeitung durch ein Packmodul verwendet werden.

Im Folgenden werden die Vorteile der Erfindung noch einmal deutlich herausgestellt. Im bekannten Stand der Technik besteht eine häufig auftretende Problematik darin, dass die Behälter ein Etikettiermodul in geordneter Formation verlassen, dass aber anschließend die Ordnung beim Transport im Massenstrom aufgehoben wird und bei der Aufteilung der Behälter aus dem Massenstrom in Gassen wieder hergestellt werden muss. Hierfür liefert die Erfindung eine verbesserte Lösung.

Um Störungen durch den Transport und die Wiederaufteilung zu vermeiden, werden die Behälter direkt nach dem Etikettiermodul bspw. an ein individuelles Transportsystem übergeben. Der geordnete Transport der Behälter kann mit der Erfindung beibehalten werden, wobei auf den Puffer durch den Massenstrom verzichtet werden muss. Das individuelle Transportsystem nimmt immer einen Behälter oder aber auch eine größere bestimmte Anzahl an Behältern auf. Dieses Transportsystem hat den Vorteil, dass es geführt wird und über Weichen und Einteiler direkt bestimmte Formationen für das nachfolgend angeordnete Packmodul erstellen kann. Die Behälter an sich haben keinen oder nur einen begrenzten Kontakt zueinander, wodurch eine Beschädigung und/oder Lärm vermieden werden kann.

Somit ist direkt nach dem Etikettiermodul eine einspurige Anreihung der Behälter vorzufinden. Diese kann bspw. über Weichen aufgeteilt werden und liefert somit schon eine erste Richtung der Formation. Durch einen Einteiler kann die zweite Richtung der Formation erstellt werden. Werden mehrere Behälter auf ein System platziert, kann auch schon direkt nach dem Etikettiermodul eine Einteilung erfolgen. Die Formation kann jetzt durch das Packmodul ein- oder verpackt werden.

Um die durch das derzeit verwendete System verursachten Störungen zu umgehen, werden die aus dem Etikettiermodul kommenden Behälter also direkt auf Transportströme verteilt. Insbesondere erfolgt nach dem Etikettiermodul kein Aufstauen der Behälter zu einem ungeordneten Massenstrom. Stattdessen werden die Behälter direkt in mindestens zwei Gassen aufgeteilt.

Gemäß einer weiteren Ausführungsform der Erfindung geschieht dies bspw. durch so genannte Sternverteiler, durch Verteilweichen o.ä. Sternverteiler entsprechen weitgehend den bekannten Ein- bzw. Auslaufsternen. Die etikettierten Behälter werden über einen Hauptstern aus dem Etikettiermodul entfernt. Beim Kontakt mit einem ersten Verteilerstern werden die Behälter Nr. 1, 3, 5, 7 ..... (2n+1) übergeben. Beim Kontakt mit einem zweiten Verteilerstern werden die restlichen Behälter 2, 4, 6, 8 ..... (2n) übergeben. Somit erfolgt eine Aufteilung der aus dem Etikettiermodul herauskommenden Behälter auf zwei Linien. Dieses System lässt sich auch bei geeigneter Teilung variieren; bspw. ist eine Aufteilung von einer auf drei Linien möglich. Auch eine nochmalige Aufteilung auf insgesamt vier oder mehr Linien ist denkbar. Der Vorteil dieses Systems besteht in einer kontinuierlichen Teilung der Behälterströme, die sehr hohe Geschwindigkeiten, wie sie von dem Etikettiermodul vorgegeben werden, bewältigen kann. Eine weitere Kombination mit konventionellen Verteilweichen ist zudem möglich.

Eine Verteilweiche liefert schon eine Vor-Formation der Behälter, indem sie z.B. für eine 6er Gebinde-Formation immer zwei Behälter nacheinander in die jeweilige Gasse aufteilt und dann alternierend die nächste Gasse wieder mit zwei Behältern befüllt.

Im Folgenden sollen Ausführungsbeispiele erläutert werden. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A und 1B zeigen schematisch den Behältertransport zwischen einer Etikettiermaschine und einer Verpackungsmaschine gemäß bekanntem Stand der Technik.
Fig. 2 zeigt die Aufteilung der Behälter aus einem Massenstrom in Gassen gemäß bekanntem Stand der Technik.
Fig. 3 stellt beispielhaft die aus dem Stand der Technik bekannte Bildung von Gebinden dar.
Fig. 4 zeigt eine erste Ausführungsvariante eines Verfahrens bzw. Systems zur Aufteilung der aus einem Etikettiermodul kommenden Behälter.
Fig. 5 zeigt Transporteinheiten mit Greifelementen.
Fig. 6 zeigt weitere Ausführungsformen von Greifelementen.
Fig. 7 zeigt die richtige Positionierung von Behältern durch Transporteinheiten.
Figuren 8A bis C zeigen verschiedene Ansichten einer weiteren Ausführungsform eines Transportsystems.
Fig. 9 zeigt die Verbindung verschiedener Transportsysteme.
Fig. 10 zeigt eine Ausführungsform mit mehreren Etikettiermodulen
Fig. 11 zeigt verschiedene Möglichkeiten der Bildung von Mischgebinden und Mischpaletten.
Fig. 12 zeigt eine schematische Ansicht eines Transportmoduls, das eine Förderkette mit daran ankoppelbaren oder davon entkoppelbaren beweglichen Transporteinheiten umfasst.
Fig. 13 zeigt eine schematische Ansicht eines Transportmoduls, bei dem Bewegungsbahnen für separate Transporteinheiten jeweils mit magnetischen Antrieben ausgestattet sind.
Fig. 14 zeigt eine schematische Seitenansicht eines Teils des Transportmoduls gemäß Fig. 13.
Fig. 15 zeigt eine Ausführungsvariante gemäß der Erfindung, zur Aufteilung der aus einem Etikettiermodul kommenden Behälter.
Fig. 16 zeigt einen Sternverteiler.

Für gleiche oder gleich wirkende Elemente verwendet die nachfolgende Figurenbeschreibung identische Bezugszeichen. Teilweise werden der Übersicht halber nur Bezugszeichen in den einzelnen Figuren dargestellt, die für die Beschreibung der jeweiligen Figur erforderlich sind.

Die in den Figuren 1 bis 3 gezeigten Varianten sind aus dem Stand der Technik bekannt und wurden bereits zuvor beschrieben.

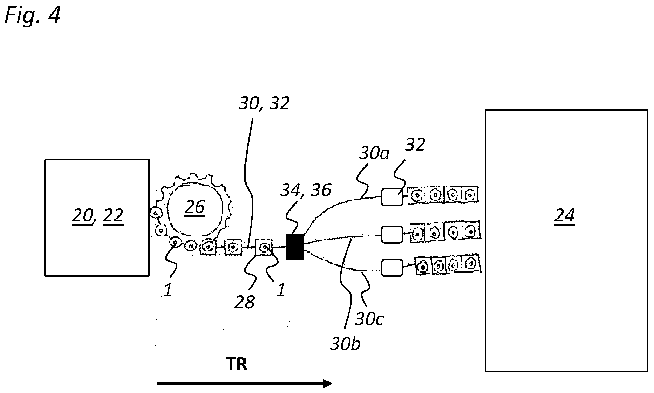

Die schematische Darstellung der Fig. 4 zeigt eine erste Ausführungsform der direkten Aufteilung der aus einem Behälterbehandlungsmodul 20 wie bspw. einem Etikettiermodul 22 ankommenden Behälter 1 und der Zuführung derselben zu einem Packmodul 24. Die über einen Auslauf- und/oder Übergabestern 26 - gebildet bspw. durch einen Drehstern - aus dem Etikettiermodul 22 herantransportierten Behälter 1 werden jeweils von Transporteinheiten 28 übernommen, die jeweils geeignete Mittel (nicht dargestellt) zum Greifen und Halten der Behälter 1 aufweisen. Die Transporteinheiten 28 werden über eine Transportvorrichtung 30, bspw. ein Schienensystem 32, in Transportrichtung TR dem Packmodul 24 zugeführt. Die Transportvorrichtung 30 kann wahlweise über Weichen 34 und/oder Einteiler 36 in mehrere Transportlinien 30a, 30b, 30c aufgeteilt werden, so dass direkt bestimmte Formationen von Behältern 1 für das Packmodul 24 erstellt werden können. Wahlweise können die unterschiedlichen Transportlinien oder -vorrichtungen 30a, 30b, 30c etc. auch dazu dienen, jeweils unterschiedliche Pack- oder Verpackungsmodule 24 mit Behältern 1 zu beliefern.

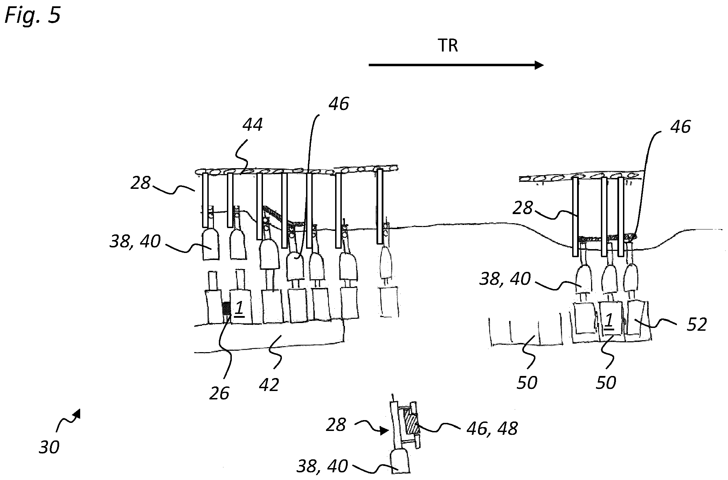

Die Aufteilung in mehrere Transportlinien 30a, 30b, 30c kann vorzugsweise über Schienen, sog. Pusher, ein individuelles Lenksystem o.ä. erfolgen. Hierbei ist es möglich, dass die Einteilung passiv gesteuert oder durch jeweils eigene zugeordnete Antriebe (nicht dargestellt) erfolgt. Insbesondere kann die Anreihung von Behältern 1 bspw. über mindestens eine Weiche 34 aufgeteilt werden. Durch Einteiler 36 wird eine bestimmte Anzahl an Behältern 1 (hier vier Behälter 1) abgetrennt. Werden mehrere Behälter 1 auf ein System platziert, kann auch schon direkt nach dem Etikettiermodul 22 eine Einteilung der Behälter 1 erfolgen (nicht dargestellt), wonach die gebildete Formation durch das Packmodul 24 eingepackt oder verpackt werden kann. Das Transportsystem 30 kann ggf. auch die Aufgaben des Packmoduls 24 übernehmen, indem bspw. geeignete Greifmittel 38 wie Packtulpen 40 (vgl. Fig. 5) o. dgl. einen vertikalen Hub ausführen können und somit Behälter 1 in Gebinde eingesetzt werden können. Es ist auch denkbar dass die Behälter 1 auf eine vordefinierte Stelle in dem Packmodul 24 eingesetzt werden. Die entleerten Transporteinheiten 28 werden nach Entnahme der Behälter 1 im Packmodul 24 wieder zum Behälterbehandlungsmodul 20 oder Etikettiermodul 22 zurückgeführt, so dass ein Kreislauf entsteht.

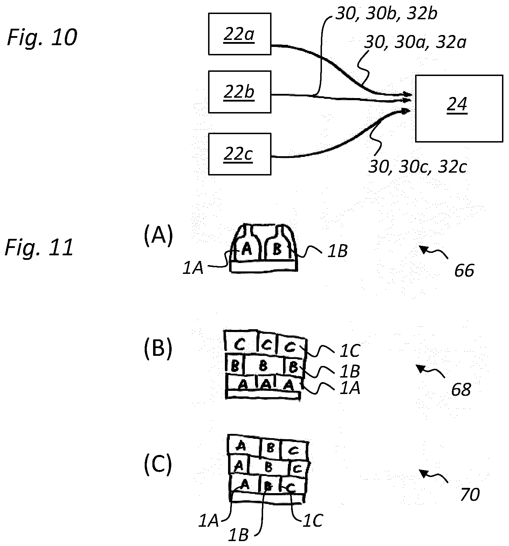

Durch das Transportsystem 30 wird vermieden, dass die Behälter 1 in einem Massenstrom M weitertransportiert und für die Verpackung wieder in Gassen 4 vereinzelt werden müssen (vgl. Fig. 1). Dabei entfällt somit die störanfällige Geländer- oder Gassenführung. Weiterhin kann eine Neujustierung bei einem Produktwechsel entfallen und es können Beschädigungen an den Behältern vermieden werden. Durch die Wegesteuerung werden neue Kommissionsmöglichkeiten eröffnet (vgl. auch Figuren 10 und 11). Das individuelle Greifen der einzelnen Behälter 1 verhindert ein Umfallen der Behälter 1 und daraus resultierende Störungen.

Die schematische Darstellung der Fig. 5 zeigt eine Ausführungsform einer Transportvorrichtung 30 mit Transporteinheiten 28 für die Behälter 1, wobei die Transporteinheiten 28 jeweils Greifelemente 38, bspw. Packtulpen 40 für die Behälter 1 aufweisen. Somit kann das Transportsystem 30 z.B. mit hängend fahrenden oder seitlich fahrenden Greifern 38 ausgestattet sein. Die Behälter 1 können von unten, von der Seite, aber auch von oben gegriffen werden, wobei diese alternativen Varianten auch in einem System miteinander kombinierbar sein können.

Die Greifelemente 38, 40 können insbesondere ein sog. Shuttle-System bilden, das durch die Transportvorrichtung 30 und eine Mehrzahl damit zusammenwirkender bzw. darin beweglich geführter Transporteinheiten 28 bzw. Shuttle für jeweils einen Behälter 1 oder mehrere Behälter 1 gebildet sein kann. Die als Shuttle-System ausgebildete Transportvorrichtung 30 ermöglicht es, eine Vorauswahl und Zusammenfassung einer definierten Anzahl von Artikeln oder Behältern 1 zu treffen und durchzuführen. Die Artikel oder Behälter 1, die insbesondere durch Flaschen gebildet sein können, werden bspw. über einen Auslaufstern 26 einzeln an eine Fördereinheit - dies kann bspw. ein Förderband 42 sein - übergeben und direkt von den Greifelementen 38 bzw. 40, die an einem Mitnehmersystem 44 angeordnet sind, übernommen. Die Distanz zwischen dem Greifelement 38, 40 und dem Mitnehmersystem 44 ist vorzugsweise längenvariabel verstellbar. Hierfür ist vorzugsweise jedem Greifelement 38, 40 ein Betätigungselement 46, bspw., eine Schiene 48 (vgl. Fig. 5B), zur Unterstützung der Längenverstellung zugeordnet. Die Artikel oder Behälter 1 werden mittels der Greifelemente 38, 40 in Transportrichtung TR befördert und bspw. in einem vorbereiteten Kasten 50, auf einer Plattform etc. in der gewünschten Anzahl zusammen abgesetzt. Diese Artikel- oder Behälterzusammenstellung in einem solchen Kasten 50 kann auch ein Gebinde 52 bilden oder als Gebinde 52 bezeichnet werden. Wahlweise sind jedoch auch andere Ausgestaltungen von Gebinden 52 denkbar, bspw. Schrumpffoliengebinde oder Umreifungsgebinde.

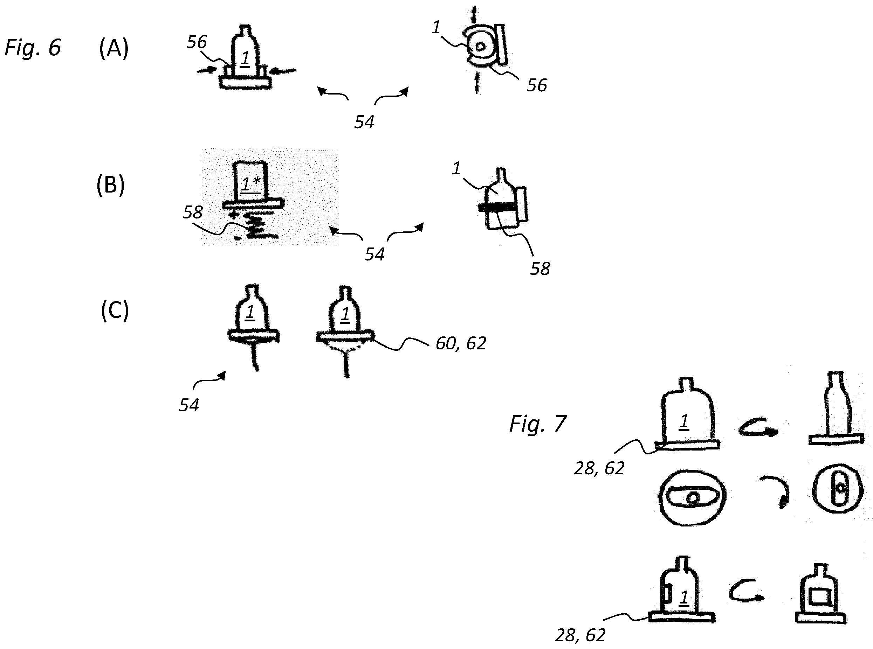

Die schematischen Ansichten der Fig. 6 zeigen weitere Ausführungsformen von Halteelementen 54, die jeweils den Transporteinheiten 28 bzw. Shuttles zugeordnet sein können, und die dem Fixieren und Festhalten der Artikel der Behälter 1 an der jeweiligen Transporteinheit 28 dienen. So zeigt die Fig. 6A ein seitlich angreifendes Greifelement 56. Die Fig. 6B zeigt zwei Möglichkeiten zur form- oder kraftschlüssigen Halterung von magnetischen Behältern 1* mittels einer magnetischen Halterung 58 durch Ansaugen oder magnetisches Fixieren, während Fig. 6C eine Plattform 60, ein sog. Shuttle 62, verdeutlicht, auf der die zu befördernden Behälter 1 angeordnet werden und die dann bspw. auf einem Schienensystem o.ä. (nicht dargestellt) individuell verfahren werden können.

Die verschiedenen Ansichten der Fig. 7 verdeutlichen, dass durch die Rotation der einzelnen Transporteinheiten 28, insbesondere der einzelnen Greifelemente (nicht dargestellt) oder Shuttles 62 eine Ausrichtung der Behälter 1 erfolgen kann. Dies ist insbesondere vorteilhaft, wenn die Behälter 1 keine runde Grundfläche aufweisen und somit für die nachfolgende Verpackung o.ä. eine definierte Ausrichtung erforderlich ist. Die Rotation der einzelnen Transporteinheiten 28 kann auch zur Ausrichtung eines auf den Behältermantelflächen befindlichen Etiketts verwendet werden.

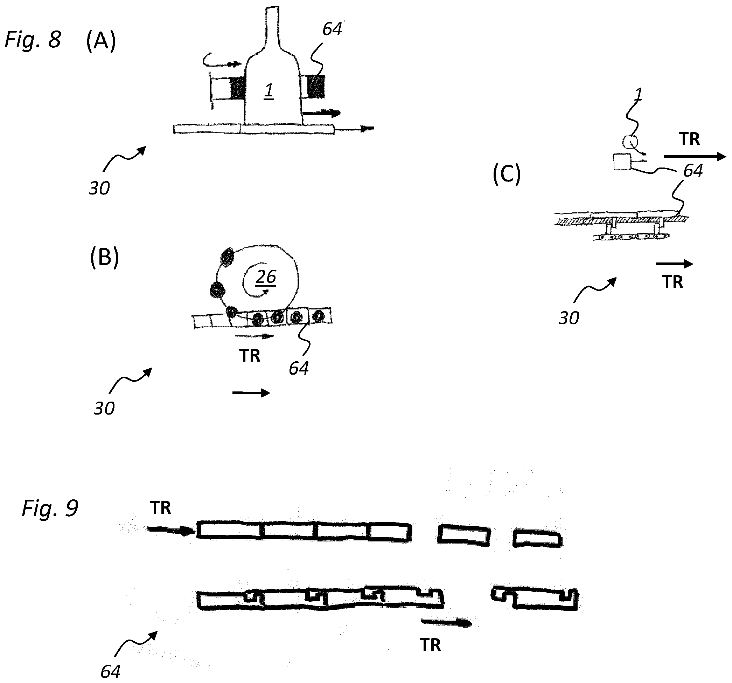

Die Figuren 8A bis C zeigen verschiedene Ansichten einer weiteren Ausführungsform eines Transportsystems bzw. einer Transportvorrichtung 30, bei der die Behälter 1 durch eine Mitnehmerkette 64 angetrieben und in Transportrichtung TR befördert werden. Die Behälter 1 werden über einen Auslauf- und/oder Übergabestern 26 bzw. Drehstern aus einem Etikettiermodul o.ä. (nicht dargestellt) herantransportiert und über die Mitnehmerkette 64 in Transportrichtung TR einzeln weiterbewegt.

Mit der Fig. 9 ist ein Teil eines Transportsystems angedeutet, das wahlweise auch über eine Verbindung der einzelnen Transportsysteme durch Zug oder Druck bewegt werden kann. Die untere Darstellung zeigt eine variabel trennbare Mitnehmerkette 64, an deren Glieder einzelne Shuttles verankert sein können, so dass sie in Transportrichtung TR bewegt werden.

Die Figuren 10 und 11 illustrieren die Erstellung von Mischgebinden 66, gemischten Paletten 68 oder sog. Regenbogenpaletten 70 etc. Hierfür werden bspw. Produkte, die aus verschiedenen Etikettiermodulen 22a, 22b, 22c über jeweils eine Transportvorrichtung 30 herantransportiert werden, bspw. über Transportlinien 30a, 30b, 30c oder über Schienensysteme 32a, 32b, 32c einer Packmaschine 24 zugeführt. Durch die individuelle Führung können die verschiedenen Produkte 1A, 1B, 1C durch die Packmaschine 24 in gewünschter Zusammenstellung gemischt werden.

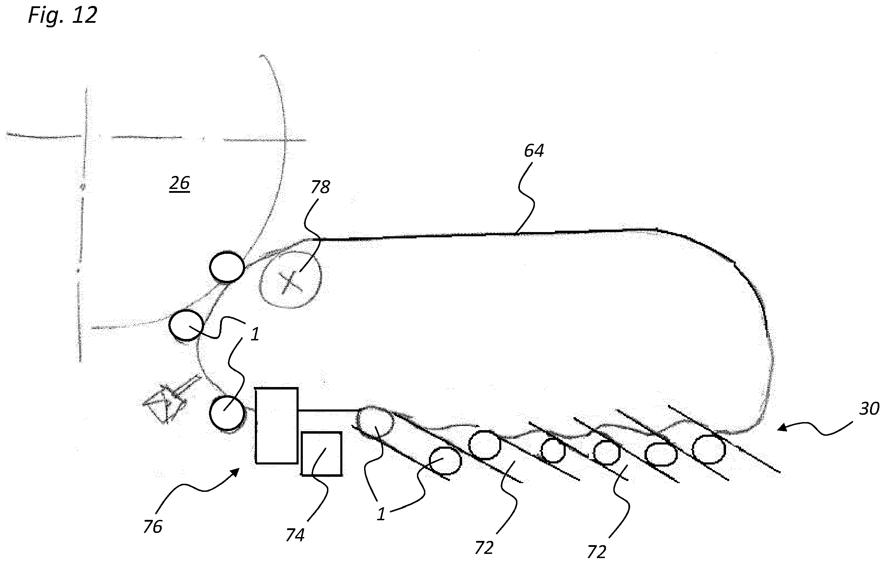

Die schematische Darstellung der Fig. 12 zeigt ein Transportmodul bzw. eine Transportvorrichtung 30, das/die eine Mitnehmer- oder Förderkette 64 mit daran ankoppelbaren oder davon entkoppelbaren beweglichen Transporteinheiten (hier nicht dargestellt) oder mit von der Förderkette 64 einzeln beförderten Behältern 1 umfasst. Im gezeigten Ausführungsbeispiel münden mehrere Transportgassen 72 tangential an die Förderkette 64, so dass von dort mittels einer geeigneten Schiebereinrichtung 74, eines sog. Pushers, die unterschiedlichen Behälter 1 je nach Bedarf in die unterschiedlichen Transportgassen 72 übergeben werden können. Mittels einer geeigneten optischen Erfassungseinrichtung 76 kann zuvor bestimmt werden, welche Behälter in welche Gassen 72 überschoben werden sollen. Wahlweise und bei Bedarf kann im Bereich der Förderkette 64 ein sog. Zwischenstern 78 zur Teilungsreduzierung des Einlaufsterns 26 angeordnet sein, bspw. um das Transportmodul 30 an eine vorhandene Maschine anpassen zu können.

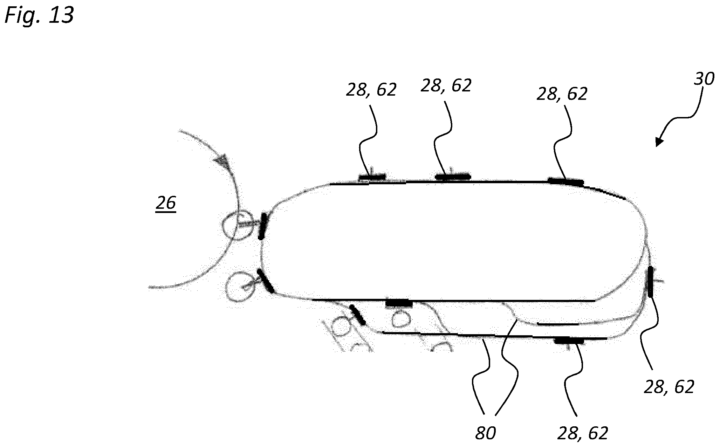

Die schematische Ansicht der Fig. 13 zeigt eine weitere Variante eines Transportmoduls 30, bei dem Bewegungsbahnen 80 für separate Transporteinheiten 28 jeweils mit magnetischen Antrieben ausgestattet sind. Bei dieser Variante weist das Transportmodul 30 separate, unabhängig voneinander bewegliche und steuerbare Transporteinheiten 28 für jeweils einen oder mehrere Behälter 1 und Bewegungsbahnen 80 für diese Transporteinheiten 28 auf, die sich an einer Stelle oder an mehreren Stellen verzweigen. So können die Bewegungsbahnen 80 für die separaten Transporteinheiten 28 jeweils mit magnetischen oder elektromagnetischen Antrieben versehen sein, wobei die Bewegungsbahnen 80 insbesondere als Langstatoren von Linearmotorabschnitten ausgebildet sein können. Speziell eine solche Ausführungsvariante mit sog. Magnet-Shuttles 62 bietet den Vorteil, dass jedes Shuttle 62 individuell angesteuert werden kann und jede Flasche 1 in eine separate Gasse der Bewegungsbahn 80 übergeben kann. Auf diese Weise kann auch ein Geschwindigkeitsabbau gewährleistet werden. Die einzelnen leeren Shuttle 62 werden dann wieder in den Rück-Kreislauf eingespeist.

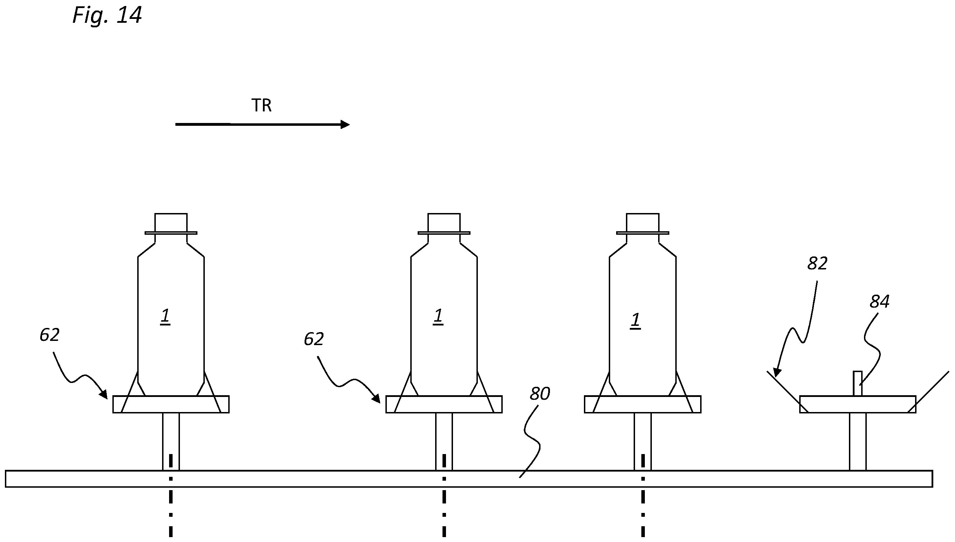

Die schematische Darstellung der Fig. 14 zeigt eine Seitenansicht eines Teils des Transportmoduls 30 gemäß Fig. 13. Hierbei übernehmen die Magnet-Shuttle 62 die Flaschen oder Behälter 1 aus einer Kette, einem Greiferstern, aus Neckring-Handling-Einrichtungen oder ähnlichen Einrichtungen und greifen die Flaschen oder Behälter 1 jeweils von unten. Dabei wird eine form- bzw. kraftschlüssige Verbindung zwischen Shuttle 62 und Behälter 1 hergestellt, welche z.B. mit einer Drei-Punkt-Klemmung 82 ausgeführt sein kann. Diese Klemmung 82 ist vorzugsweise variabel auf unterschiedliche Behältergrößen, -formen und -durchmesser einstellbar. Die Fixierung der Behälter 1 kann wahlweise auch mittels eines Hebel zwischen Bodenstück und Klemmung gelöst oder aktiviert werden, so bspw. mit einem Betätigungs-Stößel 84, so dass in der Regel kein Umrüstungsaufwand bei einem Produktwechsel oder bei der Handhabung und dem Transport unterschiedlicher Behältergrößen erforderlich ist. Die Übergabe der Flaschen oder Behälter 1 kann vorzugsweise wieder in eine Transporteinrichtung zur weiteren Bearbeitung der Behälter 1 erfolgen. Als Beispiel können dies sog. Neckring-Leisten sein, in denen die Flaschen oder Behälter mit dem Magnet-Shuttle 62 übergeben werden und im Anschluss im Neckring-Handling in die Gruppierung in einem Packmodul wie bspw. einem sog. Einweg-Packer einlaufen. Wichtig bei allen genannten Varianten ist, dass die Bewegungs- oder Verfahrbahn vorgegeben ist und die Shuttle 62 individuell ansteuerbar sind.

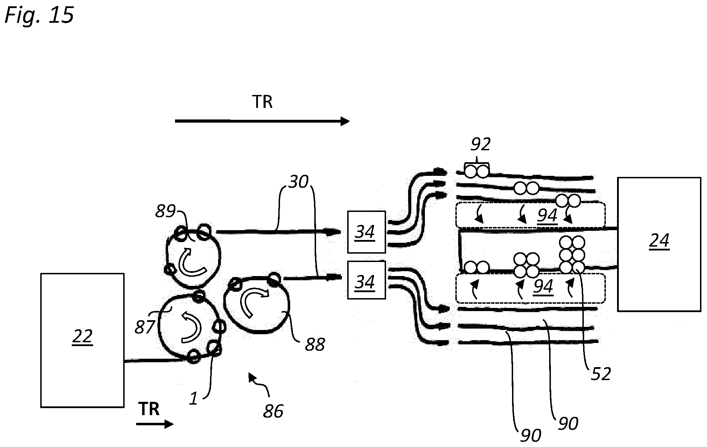

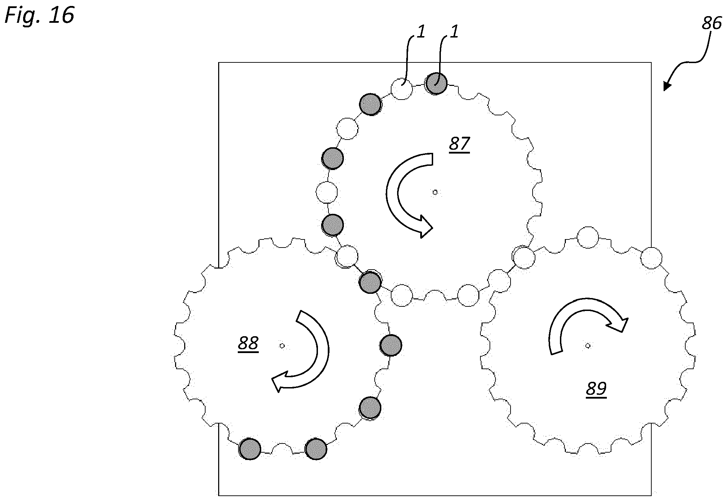

Die schematischen Darstellungen der Figuren 15 und 16 verdeutlichen anhand einer weiteren Ausführungsform eine direkte Aufteilung der aus einem Etikettiermodul 22 kommenden Behälter 1 und die Zuführung derselben zu einem Packmodul 24. Zuerst erfolgt eine Aufteilung der aus dem Etikettiermodul 22 kommenden Behälter 1 über einen Sternverteiler 86 auf zwei Transportlinien 30. Dieser Behälter-Doppelstrom wird durch Verteilweichen 34 anschließend in insgesamt sechs Transportströme aufgetrennt.

Der Sternverteiler 86 ist in Fig. 13 detailliert dargestellt und besteht im gezeigten Ausführungsbeispiel aus drei Transportsternen 87, 88, und 89. Im Hauptstern 87 werden die aus dem Etikettiermodul 22 kommenden Behälter 1 befördert. Beim Kontakt mit dem ersten Verteilerstern 88 werden bspw. die Behälter 1 Nr.1, Nr.3, Nr.5, Nr.7... Nr.(2n+1).. übergeben. Beim Kontakt mit dem zweiten Verteilerstern 89 werden die restlichen Behälter 1 Nr.2, Nr.4, Nr.6, Nr.8 ... Nr.(2n) übergeben. Somit erfolgt eine Aufteilung in die zwei Transportlinien 30. Das System lässt sich auch bei geeigneter anderer Teilung variieren, so dass zum Beispiel eine Aufteilung in drei oder mehr Transportlinien erfolgen kann. Gemäß einer alternativen Ausführungsform ist eine nochmalige Aufteilung des beschriebenen Doppelstromes auf insgesamt vier Transportlinien möglich. Der Vorteil dieses Systems besteht in einer kontinuierlichen Teilung, die sehr hohe Geschwindigkeiten, wie sie bei bekannten Etikettiermodulen 24 vorhanden sind, bewältigen kann.

Durch Kombination des Sternverteilers 86 mit Verteilweichen den 34 (vgl. Fig. 15) sind weitere Variationsmöglichkeiten gegeben. Die Verteilweichen 34 können eine Vor-Formation der Behälter 1 liefern, indem sie z.B. für eine Sechser Gebinde-Formation immer zwei Behälter 1 nacheinander in die jeweilige Gasse 90 aufteilt und dann alternierend die nächste Gasse wiederum mit zwei Behältern befüllt. Die Behälterdoppelpacks 92 können anschließend auf ein Förderband überführt und dabei über Pick- und- Place Systeme 94 direkt zu den zu verpackenden Gebinden 52 zusammengestellt und zum Packmodul 24 transportiert werden. Die Leistung zum Übersetzen der Behälter- Formationen, bspw. der Behälterdoppelpacks 92 auf das Transportband oder ein anderes Shuttle System kann u. a. durch eine Aneinanderreihung von Pick- und- Place Systemen 94 erhöht werden. Bei einem Pick- und- Place System 94 handelt es sich also insbesondere um ein System, das Mittel zum Greifen, Halten und Versetzen von mindestens einem Behälter 1 oder von einer Mehrzahl von Behältern 1 aufweist.

Das Pick-und-Place System 94 kann die Behälter 1 einzeln oder auch in Gruppen 92 erfassen. Die Gruppen 92 können folgendermaßen ausgebildet sein: mehrere Behälter 1 der Formation in eine Richtung oder die komplette Formation, d.h. ein komplettes Gebinde 52. Das hierfür benötigte Werkzeug weist zum einen Mittel Greifen und Haltern sowie Mittel zum Versetzen der Behälter 1 auf und kann zusätzlich noch bewegliche Einheiten aufweisen, um bspw. den genauen Behälterabstand für das zu erstellende Gebinde zu erreichen oder auch die Behälter zu drehen, um bspw. die Etiketten nach außen zeigen zu lassen, so dass eine Erkennung des Produktes erleichtert wird. Das System wird für das Aufteilen der Behälter 1 aus dem Etikettiermodul 22 in mehrere Transportlinien 30 verwendet und die Behälter 1 anschließend für das Packmodul 24 formatiert.

Der Transport der Behälter 1 kann bspw. gezielt aufgestaut werden, insbesondere um eine Anpassung an die Verarbeitungsgeschwindigkeit durch das Packmodul 24 zu erreichen. Weiterhin ist es möglich, einen definierten Abstand zwischen den Behältern 1 einzustellen. Die Behälter 1 werden bspw. in den Transportlinien 30 durch die bereits in Fig. 4 beschriebenen Transporteinheiten (nicht dargestellt), bspw. durch Greifer 38, magnetische Halterungen 58, Plattformen 60, Shuttles 62 o.ä. (vgl. Fig. 6) transportiert.

Durch die geordnete Förderung der Behälter 1 kann mit dieser Ausführungsform eine Kommissionierung von Produkten erfolgen. Durch die gesteuerte Aufteilung der Behälter 1 gewährleistet das System immer eine gleichmäßige Gassenbefüllung und Zuführung von Behältern zum Packmodul 24.

### Bezugszeichenliste

- 1: Behälter
- 1A, 1B, 1C: Behälter
- 1*: Magnetische Behälter
- 2: Förder- und/oder Übergabeeinrichtung
- 3: Drehstern
- 4: Förderschnecke
- 5: Förderband
- 6: Trennelement
- 7: Gasse
- 8: Behältergruppe
- 9: Gebinde
- 10: Gruppiervorrichtung
- 11: Greifmittel
- 20: Behälterbehandlungsmodul
- 22: Etikettiermodul
- 24: Packmodul
- 26: Auslauf- und/oder Übergabestern
- 28: Transporteinheit
- 30: Transportvorrichtung, Transportsystem
- 30a, 30b, 30c: Erste, zweite, dritte Transportvorrichtung
- 32: Schienensystem
- 32a, 32b, 32c: Erstes, zweites, drittes Schienensystem
- 34: Weiche
- 36: Einteiler
- 38: Greifelement
- 40: Packtulpe
- 42: Förderband
- 44: Mitnehmersystem
- 46: Betätigungselement
- 48: Schiene
- 50: Kasten
- 52: Gebinde
- 54: Halteelement
- 56: Greifelement, seitlich verfahrbares Halteelement
- 58: Magnetisches Halteelement, magnetische Halterung
- 60: Plattform
- 62: Shuttle
- 64: Mitnehmerkette
- 66: Mischgebinde
- 68: Gemischte Palette
- 70: Regenbogenpalette
- 72: Transportgasse
- 74: Schiebereinrichtung
- 76: Optische Erfassungseinrichtung
- 78: Zwischenstern
- 80: Bewegungsbahn
- 82: Dreipunkt-Klemmung
- 84: Betätigungs-Stößel
- 86: Sternverteiler
- 87: Transportstern / Hauptstern
- 88: Transportstern / erster Verteilerstern
- 89: Transportstern / zweiter Verteilerstern
- 90: Gasse
- 92: Behälter-Doppelpack
- 94: Pick- und- Place- System
- M: Massenstrom
- TR: Transportrichtung

## Patentansprüche

1. Anordnung mehrerer miteinander gekoppelter und in unmittelbar aufeinander folgender Behandlungsabfolge stehender Behälterhandhabungs- oder Behälterbehandlungs- und Behältertransportmodule, umfassend zumindest ein erstes Behälterbehandlungs- und/oder Behälterhandhabungsmodul (20) und wenigstens ein diesem unmittelbar nachgeordnetes Transportmodul (30) sowie Zuführeinrichtungen und wenigstens ein Packmodul (24), das Transportmodul (30) ausgebildet zur gesteuerten und geordneten Förderung und Verteilung einzelner Behälter (1) und/oder Gruppen von zwei oder mehr Behältern (1) zu bzw. auf den Zuführeinrichtungen zum wenigstens einen Packmodul (24), welches für die Zusammenfassung von Gruppierungen, Gebinden (52) und/oder Palettenlagen aus gleichen oder unterschiedlichen Behältern (1) und/oder Gebinden (52) und/oder Gebinden (52) mit jeweils unterschiedlichen Behältern vorbereitet ist, wobei die Bewegungsbahnen (80) im Bereich des wenigstens einen Transportmoduls (30) mindestens eine Verzweigungsstelle zur gesteuerten Lenkung und/oder Aufteilung des Produkt- und/oder Behälterstroms zum wenigstens einen Packmodul (24) aufweisen, wobei die mindestens eine Verzweigungsstelle durch eine Verteilweiche (34) gebildet ist, die den ankommenden Behälter- oder Gebindestrom auf zwei oder mehr Gassen (90) aufteilt, wobei dem wenigstens einen Packmodul (24) ein Pick-und-Place-System (94) zugeordnet ist, wobei jeweils ein Pick-und-Place-System (94) für mehrere parallele Gassen (90) vorgesehen ist, wobei die Förderströme dem Pick-und-Place-System zugeführt werden, und wobei die Verteilweiche (34) eine Vor-Formation der Behälter liefert, indem sie Behälter in die jeweiligen Gassen (90) aufteilt, wobei jeweils ein einzelnes Pick-und-Place-System für mehrere parallele Gassen zuständig ist, **dadurch gekennzeichnet, dass** zumindest das dem wenigstens einen ersten Behälterbehandlungs- und/oder Behälterhandhabungsmodul (20) unmittelbar nachgeordnete Transportmodul (30) mehrere separate, unabhängig voneinander bewegliche und steuerbare Transporteinheiten (28) für jeweils einen oder mehrere Behälter (1) umfasst, wobei die Transporteinheiten (28) jeweils an vorgegebene Bewegungsbahnen (80) gebunden sind, dass das Transportmodul (30) durch eine Mehrzahl von jeweils autonomen, teilautonomen, gleisgestützten oder gleisunabhängigen Transporteinheiten (28, 62) gebildet ist, die jeweils oben, seitlich oder unten aufgehängt und/oder auf einem die Bewegungsbahnen (80) jeweils vorgebenden Gleissystem (32) bzw. einer Gleisunterlage geführt sind und dass die Bewegungsbahnen (80) für die separaten Transporteinheiten (28) jeweils mit magnetischen oder elektromagnetischen Antrieben versehen sind, wobei die Bewegungsbahnen (80) als Langstatoren von Linearmotorabschnitten ausgebildet sind.

2. Anordnung nach Anspruch 1, bei der zumindest das erste Behälterbehandlungs- und/oder Behälterhandhabungsmodul (20) und das diesem unmittelbar nachgeordnete Transportmodul (30) in einer baulichen Einheit zusammengefasst, insbesondere miteinander verblockt sind.

3. Anordnung nach Anspruch 1 oder 2, bei der die wenigstens eine im Bereich der Bewegungsbahnen (80) des wenigstens einen Transportmoduls (30) angeordnete Verzweigungsstelle zur gesteuerten Lenkung und/oder Aufteilung des Produkt- und/oder Behälterstroms zu zwei oder mehr separaten Packmodulen (24) vorbereitet ist.

4. Anordnung nach einem der Ansprüche 1 bis 3, bei der durch das Pick-und-Place-System (94) mindestens ein Behälter (1) auf einer Fördereinrichtung oder Transportvorrichtung (30) platzierbar und dem wenigstens einen Packmodul (24) zuführbar ist.

5. Verfahren zum Transport, zur Behandlung und/oder Handhabung von Behältern (1) in einer Vorrichtung gemäß Anspruch 1, **dadurch gekennzeichnet, dass** die einzelnen Behälter (1) oder Gruppen von Behältern (1) in unmittelbar aufeinander folgender Abfolge etikettiert und mittels eines Transportmoduls (30) in gesteuerter und geordneter Förderung und Verteilung wenigstens einem Packmodul (24) zugeführt werden, in dem Gruppierungen, Gebinde (52) und/oder Palettenlagen aus gleichen oder unterschiedlichen Behältern (1) und/oder Gebinden (52) zusammengefasst werden, wobei die Behälter (1) im Transportmodul (30) einzeln, paarweise oder in Gruppen mittels mehreren separaten, unabhängig voneinander beweglichen und steuerbaren Transporteinheiten (28) für jeweils einen oder mehrere Behälter (1) entlang von vorgegebenen Bewegungsbahnen (80) geführt und zum wenigstens einen Packmodul (24) transportiert werden.

6. Verfahren nach Anspruch 5, bei dem der durch die Transporteinheiten (28) mit den von diesen transportierten Behältern (1) gebildete Produkt- oder Behälterstrom innerhalb des wenigstens einen Transportmoduls (30) an mindestens einer Verzweigungsstelle gesteuert gelenkt und/oder aufgeteilt wird.

7. Verfahren nach Anspruch 5 oder 6, bei der die Behälter (1) im wenigstens einen Packmodul (24) mittels eines Pick-und-Place-Systems (94) von den Transporteinheiten (28) getrennt und an eine nachgeordnete Handhabungs- und/oder Packstation (24) übergeben werden.

## Claims

1. An arrangement of a plurality of container handling modules or of container treating modules and container transport modules coupled with each other and being in a treatment sequence immediately following one another, the arrangement comprising at least one first container treating module and/or container handling module (20) and at least one transport module (30) disposed immediately downstream therefrom, as well as feeder devices and at least one packaging module (24), the transport module (30) being designed for conveying and distributing individual containers (1) and/or groups of two or more containers (1) in a controlled and sorted manner onto or, as applicable, on the feeder devices to the at least one packaging module (24), which is prepared for combining groups, bundles (52), and/or pallet layers of same or different containers (1) and/or bundles (52) and/or bundles (52) of, in each instance, different containers, wherein the paths of movement (80) in the area of the at least one transport module (30) have at least one branching point for the controlled guiding and/or dividing of the product stream and/or container stream to the at least one packaging module (24), wherein the at least one branching point is formed by a divider switch (34), which divides the incoming container stream or bundle stream into two or more lanes (90), wherein a pick-and-place system (94) is associated with the at least one packaging module (24), wherein in each case one pick-and-place system (94) is provided for a plurality of parallel lanes (90), wherein the conveyor streams are fed to the pick-and-place system, and wherein the divider switch (34) supplies a preformation of the containers by dividing containers into the particular lanes (90), wherein in each instance one single pick-and-place system (94) is responsible for a plurality of parallel lanes (90), **characterised in that** at least the transport module (30) immediately downstream from the at least one first container treating module and/or container handling module (20) comprises a plurality of separate transport units (28), in each instance for one or more containers (1), the transport units (28) being movable and controllable independently of one another, wherein the transport units (28) are in each instance linked to specified paths of movement (80), and **in that** the transport module (30) is formed by a plurality of in each instance autonomous, semi-autonomous, track-based, or track-independent transport units (28, 62), which are in each instance suspended at the top, at the sides, or at the bottom and/or guided on a track system (32) or a track pad, which in each instance specifies the paths of movement (80), and **in that** the paths of movement (80) for the separate transport units (28) are in each instance provided with magnetic or electromagnetic drives, wherein the paths of movement (80) are designed as long stators of linear motor sections.

2. The arrangement according to claim 1, in which at least the first container treating module and/or container handling module (20) and the transport module (30) immediately downstream therefrom are combined in one constructional unit, in particular, interlocked with each other.

3. The arrangement according to claim 1 or 2, in which the at least one branching point disposed in the area of the paths of movement (80) of the at least one transport module (30) is prepared for the controlled guiding and/or dividing of the product stream and/or container stream to two or more separate packaging modules (24).

4. The arrangement according to one of the claims 1 to 3, in which at least one container (1) is placeable on a conveying device or transport apparatus (30) and is feedable to the at least one packaging module (24) by means of the pick-and-place system (94).

5. A method for the transport, for the treatment, and/or for the handling of containers (1) in an apparatus according to claim 1, **characterised in that** the individual containers (1) or groups of containers (1) are labelled in sequence immediately following one another and are fed by means of a transport module (30) in a controlled and sorted conveyance and distribution to at least one packaging module (24), in which groups, bundles (52), and/or pallet layers of same or different containers (1) and/or bundles (52) are combined, wherein the containers (1) are guided in the transport module (30) individually, pairwise, or in groups along specified paths of movement (80) by means of a plurality of separate transport units (28), in each instance for one or more containers (1), the transport units (28) being movable and controllable independently of one another, and are transported to the at least one packaging module (24).

6. The method according to claim 5, in which the product stream or container stream formed by the transport units (28) from the containers (1) transported therewith is guided and/or divided within the at least one transport module (30) in a controlled manner at at least one branching point.

7. The method according to claim 5 or 6, in which the containers (1) are separated from the transport units (28) in the at least one packaging module (24) by means of a pick-and-place system (94) and are delivered to a downstream handling station and/or packaging station (24).

## Revendications

1. Ensemble d'une pluralité de modules de manipulation de récipient ou de traitement de récipient et de transport de récipient qui sont couplés entre eux et se trouvent dans un ordre de traitement immédiatement successif, comprenant au moins un premier module de traitement de récipient et/ou de manipulation de récipient (20) et au moins un module de transport (30) situé directement en aval de celui-ci ainsi que des dispositifs d'alimentation et au moins un module d'emballage (24), ledit module de transport (30) est conçu pour transporter et distribuer de manière commandée et ordonnée des récipients (1) individuels et/ou des groupes de deux récipients (1) ou plus vers ou bien sur les dispositifs d'alimentation en direction dudit au moins un module d'emballage (24) qui est préparé pour réunir des groupements, des multipacks (52) et/ou des couches de palette (52) se composant de récipients (1) et/ou multipacks (52) identiques ou différents et/ou des multipacks (52) comprenant des récipients respectivement différents, dans lequel les trajectoires de déplacement (80) présentent au niveau dudit au moins un module de transport (30) au moins un point de branchement pour diriger et/ou répartir de manière commandée le flux de produits et/ou de récipients en direction dudit au moins un module d'emballage (24), dans lequel ledit au moins un point de branchement est formé par une aiguille de distribution (34) qui divise en deux ruelles (90) ou plus le flux de récipients ou de multipacks qui arrive, audit au moins un module d'emballage (24) étant associé un système de pick-and-place (94), dans lequel respectivement un système de pick-and-place (94) est prévu pour plusieurs ruelles (90), dans lequel les flux de transport sont amenés au système de pick-and-place, et dans lequel l'aiguille de distribution (34) fournit une préformation des récipients en répartissant des récipients dans les ruelles (90) respectives, dans lequel respectivement un seul système de pick-and-place est en charge de plusieurs ruelles parallèles, **caractérisé par le fait qu'**au moins le module de transport (30) qui est situé directement en aval dudit au moins un premier module de traitement de récipient et/ou de manipulation de récipient (20) comprend une pluralité d'unités de transport (28) séparées pour respectivement un ou plusieurs récipients (1), qui peuvent être déplacées et commandées de manière indépendante les unes des autres, dans lequel les unités de transport (28) sont liées chacune à des trajectoires de déplacement (80) prédéterminées, que le module de transport (30) est formé par une pluralité d'unités de transport (28, 62) respectivement autonomes, partiellement autonomes, guidées sur voies ou indépendantes de voies, qui sont suspendues chacune au-dessus, latéralement ou au-dessous et/ou sont guidées sur un système de voies (32) ou bien une base de voies prédéfinissant respectivement les trajectoires de déplacement (80), et que les trajectoires de déplacement (80) pour les unités de transport (28) séparées sont munies chacune de mécanismes d'entraînement magnétiques ou électromagnétiques, les trajectoires de déplacement (80) étant réalisées en tant que stators longs de sections de moteur linéaire.

2. Ensemble selon la revendication 1, dans lequel au moins ledit premier module de traitement de récipient et/ou de manipulation de récipient (20) et le module de transport (30) situé directement en aval de celui-ci sont réunis pour former une unité constructive, en particulier sont mis en bloc l'un avec l'autre.

3. Ensemble selon la revendication 1 ou 2, dans lequel ledit au moins un point de branchement disposé au niveau des trajectoires de déplacement (80) dudit au moins un module de transport (30) est préparé pour diriger et/ou répartir de manière commandée le flux de produits et/ou de récipients vers deux modules d'emballage (24) séparés ou plus.

4. Ensemble selon l'une quelconque des revendications 1 à 3, dans lequel au moins un récipient (1) peut être placé sur un convoyeur ou dispositif de transport (30) et être amené audit au moins un module d'emballage (24) par ledit système de pick-and-place (94).

5. Procédé de transport, de traitement et/ou de manipulation de récipients (1) dans un dispositif selon la revendication 1, **caractérisé par le fait que** les récipients (1) individuels ou groupes de récipients (1) sont étiquetés dans un ordre immédiatement successif et sont amenés, au moyen d'un module de transport (30), en étant transportés et distribués de manière commandée et ordonnée, à au moins un module d'emballage (24) dans lequel sont réunis des groupements, multipacks (52) et/ou couches de palette se composant de récipients (1) et/ou multipacks (52) identiques ou différents, dans lequel les récipients (1) sont guidés, dans le module de transport (30), de façon individuelle, par paires ou en groupes, au moyen de plusieurs unités de transport (28) séparées pour respectivement un ou plusieurs récipients (1) qui peuvent être déplacées et commandées indépendamment les unes des autres, le long de trajectoires de déplacement (80) prédéterminées, et sont transportés vers ledit au moins un module d'emballage (24).

6. Procédé selon la revendication 5, dans lequel le flux de produits ou de récipients formé par les unités de transport (28) à partir des récipients (1) transportés par celles-ci est dirigé et/ou réparti de manière commandée à l'intérieur dudit au moins un module de transport (30) sur au moins un point de branchement.

7. Procédé selon la revendication 5 ou 6, dans lequel les récipients (1) sont séparés des unités de transport (28) dans ledit au moins un module d'emballage (24) au moyen d'un système de pick-and-place (94) et sont transmis à un poste de manipulation et/ou d'emballage (24) disposé en aval.
